# EUROPEAN PATENT APPLICATION

(11) **EP 4 431 357 A1**
(43) Date of publication of application: **18.09.2024**
(21) Application number: 22934820.6
(22) Date of filing: 16.11.2022
(51) Int. Cl.: B60W 50/16

(54) **VIBRATION CONTROL SYSTEM FOR STEERING WHEEL, CONTROL METHOD, AND VEHICLE**

(30) Priority: 31.03.2022 CN 202210346577
(71) Applicant: BYD Company Limited, Shenzhen, Guangdong 518118 (CN)
(72) Inventor: ZHONG, Yilin, Shenzhen, Guangdong 518118 (CN); WU, Chunfen, Shenzhen, Guangdong 518118 (CN); FANG, Lei, Shenzhen, Guangdong 518118 (CN); LIU, Jie, Shenzhen, Guangdong 518118 (CN); LONG, Chengfeng, Shenzhen, Guangdong 518118 (CN)
(74) Representative: Dehns Germany Partnerschaft mbB
(86) International application number: PCT/CN2022/132392
(87) International publication number: WO 2023/185002

(57) **Abstract**

A vibration control method for a steering wheel is provided. The method includes: Vibration interaction information is obtained. The vibration interaction information includes at least one of user information corresponding to a user of a vehicle, multimedia information of the vehicle, traveling information of the vehicle, environmental information of an environment in which the vehicle is located, and lighting information of the vehicle. A vibration parameter of a steering wheel is determined according to the vibration interaction information. A transverse linear motor is controlled according to the vibration parameter to vibrate, to enable the steering wheel to vibrate with the transverse linear motor. The vibration parameter includes at least one of a vibration frequency, a vibration amplitude, vibration duration, and a vibration direction.

## Description

### CROSS-REFERENCE TO RELATED APPLICATIONS

The present disclosure claims priority to and benefits of Chinese Patent Application No. 202210346577.2, filed on March 31, 2022 and entitled "VIBRATION CONTROL SYSTEM FOR STEERING WHEEL, CONTROL METHOD, AND VEHICLE". The entire content of the above-referenced application is incorporated herein by reference.

### FIELD

The present disclosure relates to the field of vehicle control technologies, and in particular, to a vibration control system for a steering wheel, a control method, and a vehicle.

### BACKGROUND

At present, the vehicle has become an indispensable tool for users to travel, and the steering wheel is a component that users need to control at all times during traveling of the vehicle. However, with the continuous development of smart cockpit technologies, people have increasingly high requirements for the operability and intelligence of the steering wheel. The conventional steering wheel has an undiversified control mode, and fails to interact with a user according to different vehicle usage scenarios. It is difficult for the conventional steering wheel to satisfy use requirements of users for the steering wheel.

### SUMMARY

The present disclosure aims to resolve at least one of the technical problems in the related art to some extent.

Therefore, a first objective of the present disclosure is to provide a vibration control system for a steering wheel, to resolve the related technical problems in the related art.

A second objective of the present disclosure is to provide a vibration control method for a steering wheel.

A third objective of the present disclosure is to provide a vehicle.

To achieve the foregoing objectives, an embodiment according to a first aspect of the present disclosure provides a vibration control system for a steering wheel. The system includes a controller, an information obtaining apparatus, and a steering wheel of a vehicle. The controller is connected to the information obtaining apparatus and the steering wheel respectively. A transverse linear motor is arranged on the steering wheel.

The information obtaining apparatus is configured to obtain vibration interaction information and send the vibration interaction information to the controller. The vibration interaction information includes at least one of user information corresponding to a user of the vehicle, multimedia information of the vehicle, traveling information of the vehicle, environmental information of an environment in which the vehicle is located, and lighting information of the vehicle.

The controller is configured to determine a vibration parameter of the steering wheel according to the vibration interaction information, and control, according to the vibration parameter, the transverse linear motor to vibrate, to enable the steering wheel to vibrate with the transverse linear motor. The vibration parameter includes at least one of a vibration frequency, a vibration amplitude, vibration duration, and a vibration direction.

According to an embodiment of the present disclosure, a plurality of information obtaining apparatuses are included. Each information obtaining apparatus corresponds to one type of vibration interaction information.

Each information obtaining apparatus is configured to obtain the vibration interaction information corresponding to the information obtaining apparatus and send the vibration interaction information corresponding to the information obtaining apparatus to the controller.

The controller is configured to determine target vibration interaction information according to a plurality of pieces of vibration interaction information obtained, and determine the vibration parameter according to the target vibration interaction information.

According to an embodiment of the present disclosure, each type of vibration interaction information corresponds to a preset vibration priority. The controller is configured to use vibration interaction information corresponding to a highest vibration priority as the target vibration interaction information.

According to an embodiment of the present disclosure, in a case that the vibration interaction information includes the user information, the controller is configured to determine a user identifier of the user according to the user information, and determine the vibration parameter according to the user identifier and the vibration interaction information. The user information includes at least one of face information, voice information, fingerprint information, and weight information.

According to an embodiment of the present disclosure, the controller is configured to determine a target parameter correspondence in a plurality of preset parameter correspondences according to the user identifier, and determine the vibration parameter according to the vibration interaction information and the target parameter correspondence. The preset parameter correspondence is a correspondence between the vibration interaction information and the vibration parameter.

According to an embodiment of the present disclosure, the controller is configured to determine, according to the vibration interaction information, a vehicle usage scenario in which the vehicle is located, and determine the vibration parameter according to the vehicle usage scenario and the vibration interaction information.

According to an embodiment of the present disclosure, the controller is configured to determine whether the vehicle usage scenario includes a target vehicle usage scenario, and skip, when determining that the vehicle usage scenario includes the target vehicle usage scenario, responding to vibration interaction information corresponding to the target vehicle usage scenario.

According to an embodiment of the present disclosure, the controller is configured to determine whether the vibration interaction information satisfies a preset information condition, and determine, when determining that the vibration interaction information does not satisfy the preset information condition, that the vibration interaction information is abnormal information.

According to an embodiment of the present disclosure, in a case that the vibration interaction information includes only the user information, and the user information is face information, the information obtaining apparatus is a face information obtaining apparatus. The face information obtaining apparatus is configured to obtain the face information and send the face information to the controller. The face information includes a facial feature, an eye status, and head movement data of the user.

The controller is configured to determine a fatigue status of the user according to the face information, and determine the vibration parameter according to the fatigue status.

According to an embodiment of the present disclosure, in a case that the vibration interaction information includes only the multimedia information, and the multimedia information includes audio information and volume information, the information obtaining apparatus includes an audio information obtaining apparatus and a volume information obtaining apparatus.

The audio information obtaining apparatus is configured to obtain audio information of target audio and send the audio information to the controller.

The volume information obtaining apparatus is configured to obtain volume information of the target audio adjusted by the user and send the volume information to the controller.

The controller is configured to determine a vibration frequency of the steering wheel according to the audio information and using a preset vibration frequency correspondence. The vibration frequency correspondence is a correspondence between the audio information and the vibration frequency.

The controller is configured to determine a vibration amplitude of the steering wheel according to the volume information and using a preset vibration amplitude correspondence. The vibration amplitude correspondence is a correspondence between the volume information and the vibration amplitude.

According to an embodiment of the present disclosure, in a case that the vibration interaction information includes only the multimedia information, and the multimedia information is call information, the information obtaining apparatus is a call information obtaining apparatus. The call information obtaining apparatus is configured to obtain call information of a currently connected target call and send the call information to the controller.

The controller is configured to determine the vibration parameter according to the call information.

According to an embodiment of the present disclosure, the call information includes a call identifier of the target call.

The controller is configured to determine a call priority of the target call according to the call identifier, and determine the vibration parameter according to the call priority.

According to an embodiment of the present disclosure, in a case that the vibration interaction information includes only the traveling information, the information obtaining apparatus is a traveling information obtaining apparatus. The traveling information obtaining apparatus is configured to obtain traveling information of the vehicle and send the traveling information to the controller.

The controller is configured to determine the vibration parameter according to the traveling information.

According to an embodiment of the present disclosure, in a case that the vibration interaction information includes only the environmental information, the information obtaining apparatus is an environmental information obtaining apparatus. The environmental information obtaining apparatus is configured to obtain the environmental information and send the environmental information to the controller.

The controller is configured to determine the vibration parameter according to the environmental information and a preset navigation route.

According to an embodiment of the present disclosure, the environmental information includes road information of a road on which the vehicle is located and obstacle information of surroundings of the vehicle.

The controller is configured to determine a traveling operation of the vehicle according to the road information, the obstacle information, and the navigation route, and determine the vibration parameter according to the traveling operation.

According to an embodiment of the present disclosure, in a case that the vibration interaction information includes only the lighting information, the information obtaining apparatus is a lighting information obtaining apparatus.

The lighting information obtaining apparatus is configured to obtain lighting information of a target light inside the vehicle and send the lighting information to the controller. The lighting information includes a lighting color, a flashing frequency, and a lighting presentation effect of the target light.

The controller is configured to determine a vibration amplitude of the steering wheel according to the lighting color, determine a vibration frequency of the steering wheel according to the flashing frequency, and determine vibration duration and a vibration direction of the steering wheel according to the lighting presentation effect.

The embodiment according to the first aspect of the present disclosure provides a vibration control system for a steering wheel. Vibration parameters of the steering wheel in different vehicle usage scenarios are determined according to vibration interaction information, and the steering wheel is controlled based on the vibration parameters through a transverse linear motor to vibrate, to adjust the vibration form of the steering wheel in the different vehicle usage scenarios, thereby optimizing the interactive experience of the steering wheel while improving the operability and intelligence of the steering wheel, to further satisfy use requirements of users for the steering wheel.

To achieve the foregoing objectives, an embodiment according to a second aspect of the present disclosure provides a vibration control method for a steering wheel. The method includes:
Vibration interaction information is obtained. The vibration interaction information includes at least one of user information corresponding to a user of the vehicle, multimedia information of the vehicle, traveling information of the vehicle, environmental information of an environment in which the vehicle is located, and lighting information of the vehicle.

A vibration parameter of a steering wheel is determined according to the vibration interaction information. A transverse linear motor is controlled according to the vibration parameter to vibrate, to enable the steering wheel to vibrate with the transverse linear motor. The vibration parameter includes at least one of a vibration frequency, a vibration amplitude, vibration duration, and a vibration direction.

According to an embodiment of the present disclosure, that vibration interaction information is obtained includes:
Vibration interaction information corresponding to each information obtaining apparatus is obtained. Each information obtaining apparatus corresponds to one type of vibration interaction information.

That a vibration parameter of the steering wheel is determined according to the vibration interaction information includes:
Target vibration interaction information is determined according to a plurality of pieces of vibration interaction information obtained, and the vibration parameter is determined according to the target vibration interaction information.

According to an embodiment of the present disclosure, each type of vibration interaction information corresponds to a preset vibration priority. That target vibration interaction information is determined according to a plurality of pieces of vibration interaction information obtained includes:
Vibration interaction information corresponding to a highest vibration priority is used as the target vibration interaction information.

According to an embodiment of the present disclosure, in a case that the vibration interaction information includes the user information, that a vibration parameter of the steering wheel is determined according to the vibration interaction information includes:
A user identifier of the user is determined according to the user information, and the vibration parameter is determined according to the user identifier and the vibration interaction information. The user information includes at least one of face information, voice information, fingerprint information, and weight information.

According to an embodiment of the present disclosure, that the vibration parameter is determined according to the user identifier and the vibration interaction information includes:
A target parameter correspondence is determined in a plurality of preset parameter correspondences according to the user identifier, and the vibration parameter is determined according to the vibration interaction information and the target parameter correspondence. The preset parameter correspondence is a correspondence between the vibration interaction information and the vibration parameter.

According to an embodiment of the present disclosure, that the vibration parameter is determined according to the user identifier and the vibration interaction information includes:

A vehicle usage scenario in which the vehicle is located is determined according to the vibration interaction information, and the vibration parameter is determined according to the vehicle usage scenario and the vibration interaction information.

According to an embodiment of the present disclosure, the method further includes:
It is determined whether the vehicle usage scenario includes a target vehicle usage scenario, and when it is determined that the vehicle usage scenario includes the target vehicle usage scenario, responding to vibration interaction information corresponding to the target vehicle usage scenario is skipped.

According to an embodiment of the present disclosure, the method further includes:
It is determined whether the vibration interaction information satisfies a preset information condition, and when it is determined that the vibration interaction information does not satisfy the preset information condition, it is determined that the vibration interaction information is abnormal information.

According to an embodiment of the present disclosure, in a case that the vibration interaction information includes only the user information, and the user information is face information, that vibration interaction information is obtained includes:
The face information is obtained. The face information includes a facial feature, an eye status, and head movement data of the user.

That a vibration parameter of the steering wheel is determined according to the vibration interaction information includes:

A fatigue status of the user is determined according to the face information, and the vibration parameter is determined according to the fatigue status.

According to an embodiment of the present disclosure, in a case that the vibration interaction information includes only the multimedia information, and the multimedia information includes audio information and volume information, that vibration interaction information is obtained includes:
Audio information of target audio and volume information of the target audio adjusted by the user are obtained.

That a vibration parameter of the steering wheel is determined according to the vibration interaction information includes:
A vibration frequency of the steering wheel is determined according to the audio information and using a preset vibration frequency correspondence. The vibration frequency correspondence is a correspondence between the audio information and the vibration frequency.

A vibration amplitude of the steering wheel is determined according to the volume information and using a preset vibration amplitude correspondence. The vibration amplitude correspondence is a correspondence between the volume information and the vibration amplitude.

According to an embodiment of the present disclosure, in a case that the vibration interaction information includes only the multimedia information, and the multimedia information is call information, that vibration interaction information is obtained includes:
Call information of a currently connected target call is obtained.

That a vibration parameter of the steering wheel is determined according to the vibration interaction information includes:
The vibration parameter is determined according to the call information.

According to an embodiment of the present disclosure, the call information includes a call identifier of the target call. That a vibration parameter of the steering wheel is determined according to the vibration interaction information includes:
A call priority of the target call is determined according to the call identifier, and the vibration parameter is determined according to the call priority.

According to an embodiment of the present disclosure, in a case that the vibration interaction information includes only the traveling information, that vibration interaction information is obtained includes:
Traveling information of the vehicle is obtained.

That a vibration parameter of the steering wheel is determined according to the vibration interaction information includes:
The vibration parameter is determined according to the traveling information.

According to an embodiment of the present disclosure, in a case that the vibration interaction information includes only the environmental information, that vibration interaction information is obtained includes:
The environmental information is obtained.

That a vibration parameter of the steering wheel is determined according to the vibration interaction information includes:
The vibration parameter is determined according to the environmental information and a preset navigation route.

According to an embodiment of the present disclosure, the environmental information includes road information of a road on which the vehicle is located and obstacle information of surroundings of the vehicle. That the vibration parameter is determined according to the environmental information and a preset navigation route includes:
A traveling operation of the vehicle is determined according to the road information, the obstacle information, and the navigation route, and the vibration parameter is determined according to the traveling operation.

According to an embodiment of the present disclosure, in a case that the vibration interaction information includes only the lighting information, that vibration interaction information is obtained includes:
Lighting information of a target light inside the vehicle is obtained. The lighting information includes a lighting color, a flashing frequency, and a lighting presentation effect of the target light.

That a vibration parameter of the steering wheel is determined according to the vibration interaction information includes:
A vibration amplitude of the steering wheel is determined according to the lighting color, a vibration frequency of the steering wheel is determined according to the flashing frequency, and vibration duration and a vibration direction of the steering wheel are determined according to the lighting presentation effect.

The embodiment according to the second aspect of the present disclosure provides a vibration control method for a steering wheel. Vibration parameters of the steering wheel in different vehicle usage scenarios are determined according to vibration interaction information, and the steering wheel is controlled based on the vibration parameters through a transverse linear motor to vibrate, to adjust the vibration form of the steering wheel in the different vehicle usage scenarios, thereby optimizing the interactive experience of the steering wheel while improving the operability and intelligence of the steering wheel, to further satisfy use requirements of users for the steering wheel.

To achieve the foregoing objectives, an embodiment according to a third aspect of the present disclosure provides a vehicle, the vehicle being arranged with the vibration control system for a steering wheel according to the first aspect is arranged.

Other aspects and advantages of the present disclosure will be given in the following description, some of which will become apparent from the following description or may be learned from practices of the present disclosure.

### BRIEF DESCRIPTION OF THE DRAWINGS

The foregoing and/or additional aspects and advantages of the present disclosure will become apparent and comprehensible in the description made with reference to the following accompanying drawings, wherein:
FIG 1 is a block diagram of a vibration control system for a steering wheel according to an exemplary embodiment;
FIG 2 is a schematic structural diagram of a steering wheel according to an exemplary embodiment;
FIG 3 is a block diagram of another vibration control system for a steering wheel according to an exemplary embodiment;
FIG 4 is a block diagram of still another vibration control system for a steering wheel according to an exemplary embodiment;
FIG 5 is a block diagram of still another vibration control system for a steering wheel according to an exemplary embodiment;
FIG 6 is a block diagram of still another vibration control system for a steering wheel according to an exemplary embodiment;
FIG 7 is a block diagram of still another vibration control system for a steering wheel according to an exemplary embodiment;
FIG 8 is a block diagram of still another vibration control system for a steering wheel according to an exemplary embodiment;
FIG 9 is a block diagram of yet another vibration control system for a steering wheel according to an exemplary embodiment;
FIG 10 is a flowchart of a vibration control method for a steering wheel according to an exemplary embodiment; and
FIG 11 is a block diagram of a vehicle according to an exemplary embodiment.

### DETAILED DESCRIPTION

Embodiments of the present disclosure are described in detail below, and examples of the embodiments are shown in accompanying drawings, where the same or similar elements or the elements having same or similar functions are denoted by the same or similar reference numerals throughout the description. The following embodiments described with reference to the accompanying drawings are exemplary, and are intended to describe the present disclosure and cannot be construed as a limitation to the present disclosure.

A vibration control system for a steering wheel, a control method, and a vehicle provided in the embodiments of the present disclosure are described below with reference to the accompanying drawings.

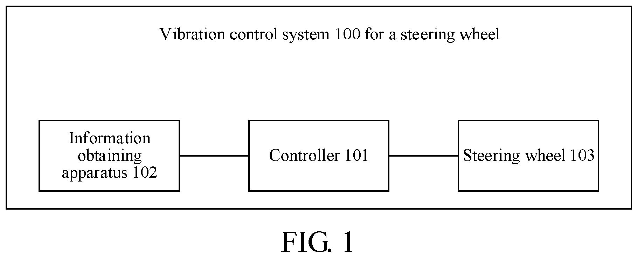

FIG 1 is a block diagram of a vibration control system for a steering wheel according to an exemplary embodiment. As shown in FIG 1, a system 100 includes a controller 101, an information obtaining apparatus 102, and a steering wheel 103 of a vehicle. The controller 101 is connected to the information obtaining apparatus 102 and the steering wheel 103 respectively. A transverse linear motor is arranged on the steering wheel 103.

The information obtaining apparatus 102 is configured to obtain vibration interaction information and send the vibration interaction information to the controller 101. The vibration interaction information includes at least one of user information corresponding to a user of the vehicle, multimedia information of the vehicle, traveling information of the vehicle, environmental information of an environment in which the vehicle is located, and lighting information of the vehicle.

For example, when a user uses a vehicle, different information is usually generated in different vehicle usage scenarios. Therefore, information generated in different vehicle usage scenarios can be obtained, and the information can be used to control the steering wheel 103 to vibrate in different forms in the different vehicle usage scenarios, to achieve different interactions with a user according to different vehicle usage scenarios, thereby improving the operability and intelligence of the steering wheel 103 and satisfying use requirements of users for the steering wheel 103.

Specifically, first, the information obtaining apparatus 102 may obtain vibration interaction information and send the vibration interaction information to the controller 101. The vibration interaction information is information generated by the vehicle in different vehicle usage scenarios. For example, when the vehicle usage scenario is a safety reminder scenario in which a user is reminded not to drive while fatigued, the vibration interaction information may be user information (for example, face information) corresponding to the user. When the vehicle usage scenario is a multimedia usage scenario such as a user enjoying music or having an incoming call connected, the vibration interaction information may be multimedia information such as audio information and call information. When the vehicle usage scenario is an assisted driving scenario of assisting a user in driving a vehicle, the vibration interaction information may be traveling information (or environmental information of an environment in which the vehicle is located) of the vehicle. When the vehicle usage scenario is a lighting presentation scenario in which a user controls a light inside a vehicle for presentation, the vibration interaction information may be lighting information of the vehicle. It should be noted that different vehicle usage scenarios may exist simultaneously. In this case, the vibration interaction information obtained by the information obtaining apparatus 102 may include a plurality of types of information. For example, when the assisted driving scenario and the lighting display scenario exist at the same time, the vibration interaction information obtained by the information obtaining apparatus 102 may include traveling information and lighting information.

The vehicle may be an automobile. The automobile is not limited to a conventional automobile, a pure electric vehicle, or a hybrid automobile. Alternatively, the vehicle may be another type of motor vehicle.

The controller 101 is configured to determine a vibration parameter of the steering wheel 103 according to the vibration interaction information, and control, according to the vibration parameter, the transverse linear motor to vibrate, to enable the steering wheel 103 to vibrate with the transverse linear motor. The vibration parameter includes at least one of a vibration frequency, a vibration amplitude, vibration duration, and a vibration direction.

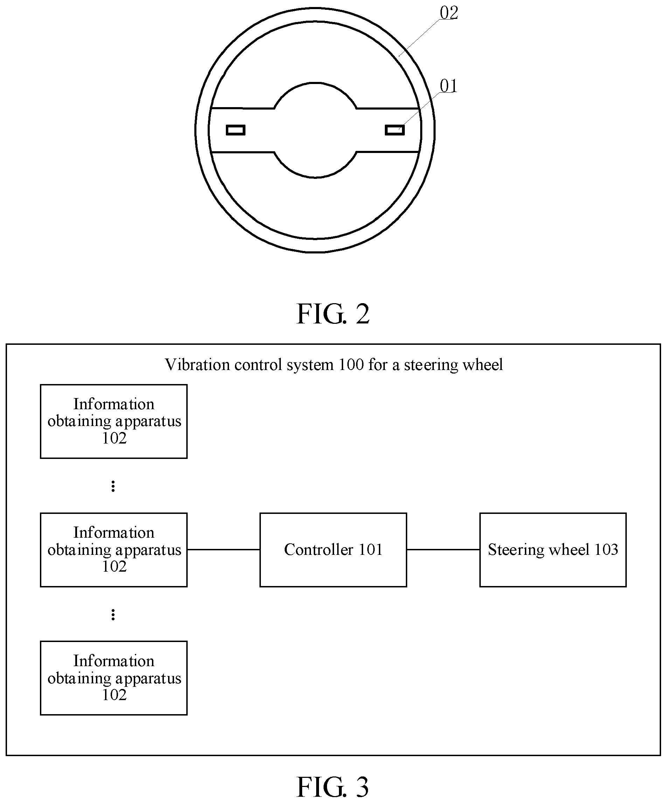

For example, because the transverse linear motor has a long vibration stroke and provides a vibration sense that is three-dimensional, clear, and comfortable and vibrations that are directional and rhythmic, can achieve more complex and various customized vibration effects, and can optimize a holding experience and a vibration feedback experience of a user, the transverse linear motor may be arranged on the steering wheel 103. For example, as shown in FIG 2 (01 in FIG 2 is used to indicate the transverse linear motor, and 02 in FIG 2 is used to indicate the steering wheel 103), the transverse linear motor may be arranged inside the body of the steering wheel, and the steering wheel is arranged on a steering column guard. After receiving the vibration interaction information, the controller 101 may determine the vibration parameter of the steering wheel 103 according to the vibration interaction information and using a preset parameter correspondence. The preset parameter correspondence is a correspondence between the vibration interaction information and the vibration parameter. Then, the controller 101 may control, according to the vibration parameter, the transverse linear motor to vibrate, to enable the steering wheel 103 to vibrate with the transverse linear motor.

In conclusion, the vibration control system for a steering wheel in the present disclosure includes a controller, an information obtaining apparatus, and a steering wheel of a vehicle. The controller is connected to the information obtaining apparatus and the steering wheel respectively. A transverse linear motor is arranged on the steering wheel. The information obtaining apparatus is configured to obtain vibration interaction information and send the vibration interaction information to the controller. The controller is configured to determine a vibration parameter of the steering wheel according to the vibration interaction information, and control, according to the vibration parameter, the transverse linear motor to vibrate, to enable the steering wheel to vibrate with the transverse linear motor. In the present disclosure, vibration parameters of the steering wheel in different vehicle usage scenarios are determined according to vibration interaction information, and the steering wheel is controlled based on the vibration parameters through a transverse linear motor to vibrate, to adjust the vibration form of the steering wheel in the different vehicle usage scenarios, thereby optimizing the interactive experience of the steering wheel while improving the operability and intelligence of the steering wheel, to further satisfy use requirements of users for the steering wheel.

FIG 3 is a block diagram of another vibration control system for a steering wheel according to an exemplary embodiment. As shown in FIG 3, a plurality of information obtaining apparatuses 102 are included. Each information obtaining apparatus 102 corresponds to one type of vibration interaction information. Each information obtaining apparatus 102 is configured to obtain the vibration interaction information corresponding to the information obtaining apparatus 102 and send the vibration interaction information corresponding to the information obtaining apparatus 102 to the controller 101.

The controller 101 is configured to determine target vibration interaction information according to a plurality of pieces of vibration interaction information obtained, and determine the vibration parameter according to the target vibration interaction information.

For example, a plurality of information obtaining apparatuses 102 may be included. Each information obtaining apparatus 102 may collect vibration interaction information in one vehicle usage scenario and send the collected vibration interaction information to the controller 101. To ensure traveling safety of the vehicle, the controller 101 needs to preferentially control the steering wheel 103 to vibrate according to vibration interaction information in a vehicle usage scenario related to traveling safety. Therefore, a vibration priority may be set in advance for vibration interaction information in different vehicle usage scenarios according to importance to traveling safety. That is, each type of vibration interaction information corresponds to a preset vibration priority. After receiving vibration interaction information sent by all the information obtaining apparatuses 102, the controller 101 may use vibration interaction information corresponding to a highest vibration priority as target vibration interaction information, and determine a vibration parameter according to the target vibration interaction information.

For example, the information obtaining apparatus 102 may include a user information obtaining apparatus and an audio information obtaining apparatus. The user information obtaining apparatus may collect user information of the vehicle in a safety reminder scenario, and the audio information obtaining apparatus may collect audio information of the vehicle in a multimedia usage scenario. Because the safety reminder scenario is more important to traveling safety than the multimedia usage scenario, a vibration priority corresponding to the user information may be set to be higher than a vibration priority corresponding to the audio information. When the controller 101 receives the user information sent by the user information obtaining apparatus and the audio information sent by the audio information obtaining apparatus, because the vibration priority corresponding to the user information is higher than the vibration priority corresponding to the audio information, the controller 101 determines the vibration parameter according to the audio information.

Optionally, in a case that the vibration interaction information includes the user information, the controller 101 is configured to determine a user identifier of the user according to the user information, and determine the vibration parameter according to the user identifier and the vibration interaction information. The user information includes at least one of face information, voice information, fingerprint information, and weight information.

For example, different users have different requirements for the vibration sense of the steering wheel. To better satisfy use requirements of users, different preset parameter correspondences may be set for different users according to requirements of the users in advance. The preset parameter correspondence is a correspondence between the vibration interaction information and the vibration parameter. In a case that the vibration interaction information includes the user information, the controller 101 may first determine a user identifier of the user according to the user information. For example, when the user information includes face information, the controller 101 may determine the user identifier of the user according to the face information and using a face recognition algorithm. Then, the controller 101 may determine a target parameter correspondence in a plurality of preset parameter correspondences according to the user identifier, and determine the vibration parameter according to the vibration interaction information and the target parameter correspondence.

Optionally, the controller 101 is configured to determine, according to the vibration interaction information, a vehicle usage scenario in which the vehicle is located, and determine the vibration parameter according to the vehicle usage scenario and the vibration interaction information.

For example, after receiving the vibration interaction information, the controller 101 may first analyze the vibration interaction information to determine which vehicle usage scenarios are the vehicle usage scenarios in which information included in the vibration interaction information is generated, and use the vehicle usage scenarios as the vehicle usage scenarios in which the vehicle is current located. For example, when the controller 101 detects that vibration interaction information includes audio information, because the audio information is usually generated when the vehicle is in a multimedia usage scenario of a user listening to music, the multimedia usage scenario may be used as a vehicle usage scenario in which the vehicle is currently located. Then, the controller 101 may determine the vibration parameter of the steering wheel 103 using a correspondence between the preset vibration parameter and the vehicle usage scenario and the vibration interaction information.

Further, in some vehicle usage scenarios, the user may not require the steering wheel 103 to vibrate. To avoid normal driving of a user from being affected by vibration of the steering wheel 103 in the vehicle usage scenarios, a vehicle usage scenario in which the user does not require the steering wheel 103 to vibrate may be set as a target vehicle usage scenario. Then, the controller 101 is configured to determine whether the vehicle usage scenario in which the vehicle is currently located includes a target vehicle usage scenario, and skip, when determining that the vehicle usage scenario in which the vehicle is currently located includes the target vehicle usage scenario, responding to vibration interaction information corresponding to the target vehicle usage scenario. It may be understood that when there is only one vehicle usage scenario, and the controller 101 determines through analysis that the vehicle usage scenario is the target vehicle usage scenario, the controller 101 controls the transverse linear motor not to vibrate. When there are a plurality of vehicle usage scenarios at the same time, and controller 101 determines through analysis that some of the vehicle usage scenarios are target vehicle usage scenarios, controller 101 does not respond to vibration interaction information corresponding to the target vehicle usage scenarios. To be specific, when analyzing the obtained vibration interaction information, the controller 101 may actively remove the vibration interaction information corresponding to the target vehicle usage scenarios, and only respond to vibration interaction information generated in a non-target vehicle usage scenario. It may be understood that the target vehicle usage scenario may be personalized according to user needs.

Optionally, the controller 101 is configured to determine whether the vibration interaction information satisfies a preset information condition, and determine, when determining that the vibration interaction information does not satisfy the preset information condition, that the vibration interaction information is abnormal information.

For example, the information obtaining apparatus 102 may obtain other information (for example, noise information). To avoid the obtained other information from affecting normal interaction between the steering wheel 103 and a user, the controller 101 may detect vibration interaction information after obtaining the vibration interaction information, to determine whether the vibration interaction information satisfies a preset information condition. The preset information condition may be set in advance according to a characteristic of the vibration interaction information. For example, the preset information condition may include whether a data format of the vibration interaction information is a preset data format, and whether a data length of the vibration interaction information falls within a preset data length range, and whether a data size of the vibration interaction information is less than a preset data value. The controller 101 determines that the vibration interaction information does not satisfy the preset information condition. The controller 101 may determine that the vibration interaction information is abnormal information. Further, when the controller 101 determines that the vibration interaction information is abnormal information, the controller 101 may control the information obtaining apparatus 102 to re-obtain the vibration interaction information.

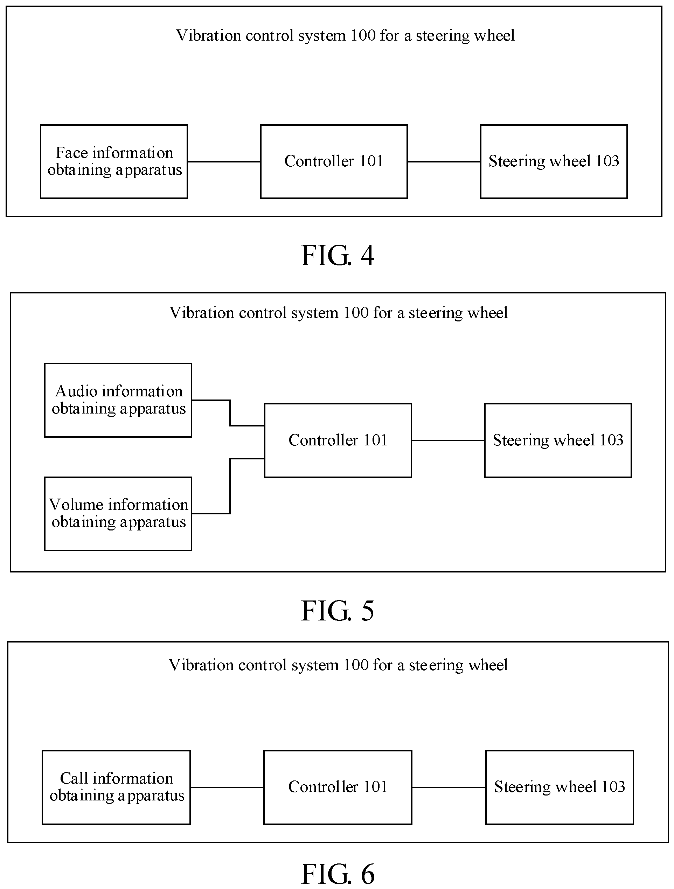

In a scenario, in a case that the vibration interaction information includes only the user information, and the user information is face information, the information obtaining apparatus 102 may be a face information obtaining apparatus. As shown in FIG 4, the face information obtaining apparatus is configured to obtain the face information and send the face information to the controller 101. The face information includes a facial feature, an eye status, and head movement data of the user.

The controller 101 is configured to determine a fatigue status of the user according to the face information, and determine the vibration parameter according to the fatigue status.

For example, when the vehicle usage scenario is a safety reminder scenario, the information obtaining apparatus 102 may be a face information obtaining apparatus. The face information obtaining apparatus may be packaged above the A-pillar of the vehicle and assembled and fixed from the inside out. Descriptions are provided using an example in which the face information obtaining apparatus is an indoor camera, and the controller 101 is a central processing unit (CPU) packaged in a host of an on-vehicle multimedia system and fixed in a center console instrument by a bolt. The indoor camera may collect face information, including a facial feature, an eye status, and head movement data, of a user, and transmit the face information to the CPU. The CPU may determine a fatigue status of the user according to the face information. The fatigue status of the user may be divided into a plurality of fatigue levels in ascending order of a fatigue degree. For example, if the fatigue levels are divided into levels 0 to 9 (a level 9 corresponds to the highest fatigue level), when a fatigue level is 0, it indicates that the user is not driving while fatigued, and when the fatigue level is 1 to 9, it indicates that the user is driving while fatigued. If the determined fatigue status of the user indicates that the user is driving while fatigued, the CPU determines the vibration parameter of the steering wheel 103 according to the fatigue level indicated by the fatigue status and using a preset correspondence between the fatigue level and the vibration parameter (different fatigue levels correspond to different vibration parameters, and the higher the fatigue level, the larger the vibration parameter), and send the vibration parameter to steering wheel 103. After the steering wheel 103 receives the vibration parameter sent by the CPU, the transverse linear motor inside the steering wheel 103 produce vibrations according to the vibration parameter to remind the user to drive safely.

Further, after the transverse linear motor completes vibrating according to the vibration parameter, the indoor camera may collect the face information of the user again, and transmit it to the CPU. The CPU may determine, according to the face information, whether the user adjusts the status, that is, determine whether the user is not in a state of driving while fatigued. If the user is still in the state of driving while fatigued, the CPU may send a vibration parameter processed through parameter enhancement (in this case, a vibration frequency, a vibration amplitude, and vibration duration in the vibration parameter are all increased correspondingly) to the steering wheel 103, to enable the transverse linear motor inside the steering wheel 103 to produce vibrations according to the processed vibration parameter, to remind the user to drive safely. Then, the foregoing steps can be repeated until the user is out of the state of driving while fatigued.

Optionally, in a case that the vibration interaction information includes only the multimedia information, and the multimedia information includes audio information and volume information. The information obtaining apparatus includes an audio information obtaining apparatus and a volume information obtaining apparatus. As shown in FIG 5, the audio information obtaining apparatus is configured to obtain audio information of target audio, and send the audio information to the controller 101.

The volume information obtaining apparatus is configured to obtain volume information of the target audio adjusted by the user, and send the volume information to the controller 101.

The controller 101 is configured to determine a vibration frequency of the steering wheel 103 according to the audio information and using a preset vibration frequency correspondence. The vibration frequency correspondence is a correspondence between the audio information and the vibration frequency.

The controller 101 is configured to determine a vibration amplitude of the steering wheel 103 according to the volume information and using a preset vibration amplitude correspondence. The vibration amplitude correspondence is a correspondence between the volume information and the vibration amplitude.

For example, when the vehicle usage scenario is a multimedia usage scenario of a user enjoying audio, the information obtaining apparatus 102 may include an audio information obtaining apparatus and a volume information obtaining apparatus. For example, the audio information obtaining apparatus may be an on-vehicle multimedia system, and the volume information obtaining apparatus may be an on-vehicle audio system (a speaker on the on-vehicle audio system may be mounted on a side panel and a door guard of the vehicle). When the user plays target audio (for example, music) through the on-vehicle multimedia system, the on-vehicle multimedia system may transmit audio information of the target audio (for example, a melody, a rhythm, and a frequency of the target audio) to the on-vehicle audio system and the controller 101 respectively. After receiving the audio information, the on-vehicle audio system may obtain volume information (for example, a magnitude of a playback volume) of the target audio adjusted by the user, and then control the speaker according to the volume information to play the target audio according to a playback volume indicated by the volume information, and transmit the volume information to the controller 101.

Then, controller 101 may determine a vibration frequency of the steering wheel 103 according to the audio information and using a vibration frequency correspondence, then, determine a vibration amplitude of the steering wheel 103 according to the volume information and using a vibration amplitude correspondence, and control the transverse linear motor according to the vibration amplitude and the vibration frequency, so that the transverse linear motor produces vibrations according to the received vibration amplitude and vibration frequency, to make vibrations of the steering wheel 103 match the target audio, thereby avoiding affecting normal driving of the user.

Optionally, in a case that the vibration interaction information includes only the multimedia information, and the multimedia information is call information, the information obtaining apparatus 102 is a call information obtaining apparatus. As shown in FIG 6, the call information obtaining apparatus is configured to obtain call information of a currently connected target call, and send the call information to the controller 101.

The controller 101 is configured to determine the vibration parameter according to the call information.

For example, when the vehicle usage scenario is a multimedia usage scenario of having an incoming call connected, the information obtaining apparatus 102 may be a call information obtaining apparatus. In this case, the call information obtaining apparatus may obtain call information of a currently connected target call, and send the call information to the controller 101. The call information includes a call identifier of the target call.

Descriptions are provided by using an example in which the call information obtaining apparatus is a PAD display screen that can display call information (the PAD display screen may be mounted on a dashboard). When a user needs to complete an answer/rejection operation when receiving an incoming call, the PAD display screen may display call information of a currently connected target call, and transmit the call information to the controller 101. After receiving the call information, the controller 101 may determine a call priority of the target call according to the call identifier included in the call information. The call priority is manually set by the user according to actual needs. Then, the controller 101 may determine the vibration parameter (for example, the higher the call priority, the larger the vibration parameter) according to the call priority and using the correspondence between the preset call priority and the vibration parameter, and control the transverse linear motor according to the vibration parameter, to enable the transverse linear motor produces vibrations according to the vibration parameter, to remind the user to perform an answer/rejection operation. Further, the user may perform the answer/rejection operation through a touch button (the touch button is arranged on a surface of the steering wheel 103) arranged on the steering wheel 103 in advance. Still further, when the user successfully performs the answer/rejection operation, the controller 101 may control the transverse linear motor to vibrate once, to enable the user to receive feedback indicating that the answer/rejection operation is successfully completed on the touch button on the steering wheel 103. When the answer/reject the operation fails to be successfully performed on the touch button on the steering wheel 103, no signal is transmitted to the transverse linear motor on the steering wheel 103, and the transverse linear motor on the steering wheel 103 does not vibrate, to allow the user to learn that the answer/rejection operation fails to be successfully completed on the touch button on the steering wheel 103.

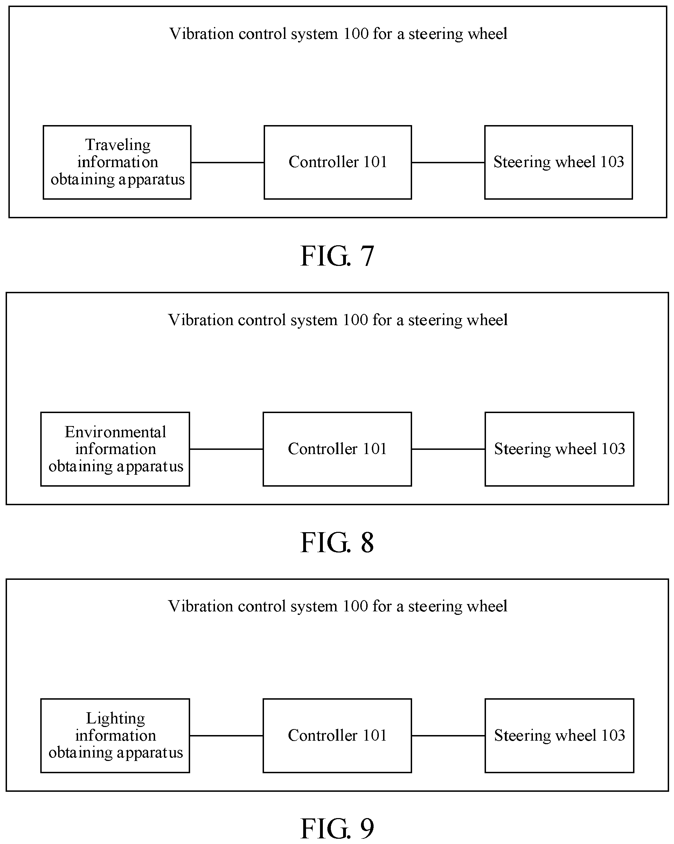

In another scenario, in a case that the vibration interaction information includes only the traveling information, the information obtaining apparatus 102 may be a traveling information obtaining apparatus. As shown in FIG 7, the traveling information obtaining apparatus is configured to obtain traveling information of the vehicle, and send the traveling information to the controller 101.

The controller 101 is configured to determine the vibration parameter according to the traveling information.

For example, when the vehicle usage scenario is an assisted driving scenario of assisting a user in driving a vehicle, the information obtaining apparatus 102 may be an instrument display screen (the instrument display screen may be mounted on a dashboard of the vehicle) that can display current traveling information of the vehicle. The traveling information may be a turning direction along which the user needs to control the vehicle to turn. When the user controls the vehicle to perform a turning operation, the turning direction along which the user needs to control the vehicle to turn is displayed on the instrument display screen (for example, when the user controls the vehicle to turn right, a right turn icon flashes on the instrument display screen), and the turning direction is transmitted to the controller 101. After receiving the turning direction, the controller 101 may determine the vibration parameter according to the turning direction (for example, when the turning direction is right, the vibration parameter may be a parameter that controls the steering wheel 103 to produce rightward vibrations), and control the transverse linear motor according to the vibration parameter, so that the transverse linear motor produces vibrations according to the vibration parameter, to remind the user to perform a corresponding turning operation according to the turning direction displayed on the instrument display screen.

In still another scenario, in a case that the vibration interaction information includes only the environmental information, the information obtaining apparatus 102 may be an environmental information obtaining apparatus. As shown in FIG 8, the environmental information obtaining apparatus is configured to obtain the environmental information, and send the environmental information to the controller 101.

The controller 101 is configured to determine the vibration parameter according to the environmental information and a preset navigation route.

For example, when the vehicle usage scenario is an assisted driving scenario of assisting a user in driving a vehicle, the information obtaining apparatus 102 may be an environmental information obtaining apparatus. In this case, the environmental information obtaining apparatus may obtain environmental information of an environment in which the vehicle is located, and send the environmental information to the controller 101. The environmental information includes road information of a road on which the vehicle is located and obstacle information of surroundings of the vehicle. After obtaining the environmental information, the controller 101 may determine a traveling operation of the vehicle according to the road information, the obstacle information, and the navigation route included in the environmental information, and determine the vibration parameter according to the traveling operation.

For example, in a case that the environmental information obtaining apparatus is a camera mounted on an interior ceiling of an automobile (the camera may capture environmental information outside the vehicle through the front windshield of the vehicle), when the vehicle is traveling, if a pedestrian passes the road ahead, the camera can capture a passing direction along which the pedestrian passes the road ahead, and transmit the passing direction to the controller 101 as obstacle information. After receiving the passing direction, the controller 101 may determine the vibration parameter according to the passing direction (for example, when the passing direction is passing the road from left to right, the vibration parameter may be a parameter that controls the steering wheel 103 to produce rightward vibrations), and controls the transverse linear motor according to the vibration parameter, so that the transverse linear motor produce vibrations according to the vibration parameter, to remind the user that there is a pedestrian passing from left to right in front of the user. The user may quickly pay attention to the right side of the vehicle, to find the pedestrian as soon as possible, thereby improving the traveling safety. Certainly, when the passing direction is passing the road from right to left, the vibration parameter may be a parameter that controls the steering wheel 103 to produce leftward vibrations, to remind the user to pay attention to the left side of the vehicle.

In another example, when the environmental information obtaining apparatus is a rear radar sensor arranged on the surface of the rear bumper of the vehicle, when the user is reversing, if the rear radar sensor detects an obstacle behind the vehicle, the rear radar sensor may collect obstacle information of the obstacle, and transmit the obstacle information to the controller 101. After receiving the obstacle information, the controller 101 may determine a location of the obstacle according to the obstacle information, then determine the traveling operation of the vehicle according to the location of the obstacle, and determine the vibration parameter according to the traveling operation. For example, if there is an obstacle on the left rear, it can be determined that the traveling operation of the vehicle should be reversing to the right rear. In this case, the vibration parameter may be a parameter that controls the steering wheel 103 to produce rightward vibrations, to remind the user to reverse to the right rear. Then, the controller 101 may control the transverse linear motor according to the vibration parameter, to enable the transverse linear motor to produce vibrations according to the vibration parameter, to remind the user to avoid the obstacle behind and reverse.

In still another scenario, in a case that the vibration interaction information includes only the lighting information, the information obtaining apparatus 102 may be a lighting information obtaining apparatus. As shown in FIG 9, the lighting information obtaining apparatus is configured to obtain lighting information of a target light inside the vehicle, and send the lighting information to the controller. The lighting information includes a lighting color, a flashing frequency, and a lighting presentation effect of the target light.

The controller 101 is configured to determine a vibration amplitude of the steering wheel according to the lighting color, determine a vibration frequency of the steering wheel according to the flashing frequency, and determine vibration duration and a vibration direction of the steering wheel according to the lighting presentation effect.

For example, when the vehicle usage scenario is a lighting presentation scenario in which a user controls a light inside a vehicle for presentation, the information obtaining apparatus 102 may be a lighting information obtaining apparatus. When the user controls the light inside the vehicle for presentation, the lighting information obtaining apparatus may obtain lighting information, including a lighting color, a flashing frequency, and a lighting presentation effect, of a target light inside the vehicle, and send the lighting information to the controller 101. After receiving the lighting information, the controller 101 may determine a vibration amplitude of the steering wheel according to the lighting color and using a preset correspondence between the lighting color and the vibration amplitude (for example, the brighter the lighting color, the larger the vibration amplitude of the steering wheel), determine a vibration frequency of the steering wheel according to the flashing frequency and using a preset correspondence between the flashing frequency and the vibration frequency (for example, the higher the flashing frequency, the higher the vibration frequency of the steering wheel), and determine vibration duration and a vibration direction of the steering wheel according to the lighting presentation effect and using a preset correspondence between the lighting presentation effect and the vibration duration and the vibration direction (when a flowing water atmosphere is used as the lighting presentation effect of the target light, if light strips of the target light are sequentially lit from left to right, the vibration parameter may be a parameter that controls the steering wheel 103 to vibrate from left to right). Then, the controller 101 may control the transverse linear motor according to the vibration parameter, to enable the transverse linear motor to produce vibrations according to the vibration parameter, to cohere with the target light, thereby improving the tactile experience of the user.

In conclusion, the vibration control system for a steering wheel in the present disclosure includes a controller, an information obtaining apparatus, and a steering wheel of a vehicle. The controller is connected to the information obtaining apparatus and the steering wheel respectively. A transverse linear motor is arranged on the steering wheel. The information obtaining apparatus is configured to obtain vibration interaction information and send the vibration interaction information to the controller. The controller is configured to determine a vibration parameter of the steering wheel according to the vibration interaction information, and control, according to the vibration parameter, the transverse linear motor to vibrate, to enable the steering wheel to vibrate with the transverse linear motor. In the present disclosure, vibration parameters of the steering wheel in different vehicle usage scenarios are determined according to vibration interaction information, and the steering wheel is controlled based on the vibration parameters through a transverse linear motor to vibrate, to adjust the vibration form of the steering wheel in the different vehicle usage scenarios, thereby optimizing the interactive experience of the steering wheel while improving the operability and intelligence of the steering wheel, to further satisfy use requirements of users for the steering wheel.

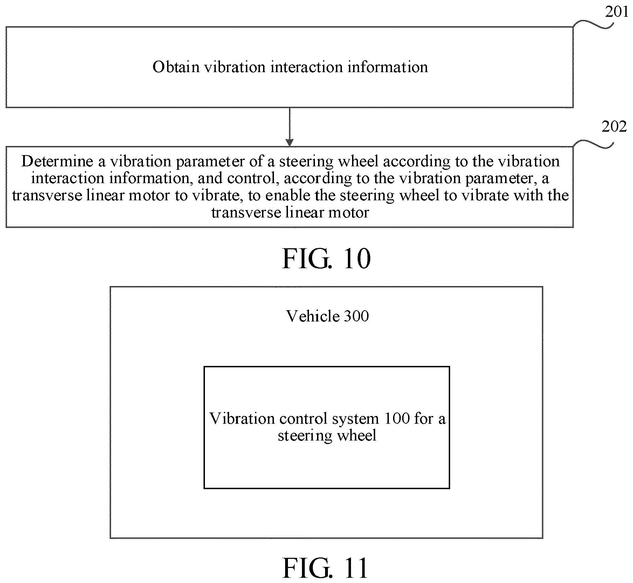

FIG 10 is a flowchart of a vibration control method for a steering wheel according to an exemplary embodiment. As shown in FIG 10, the method may include the following steps:
Step 201. Vibration interaction information is obtained. The vibration interaction information includes at least one of user information corresponding to a user of the vehicle, multimedia information of the vehicle, traveling information of the vehicle, environmental information of an environment in which the vehicle is located, and lighting information of the vehicle.
Step 202. A vibration parameter of the steering wheel is determined according to the vibration interaction information, and a transverse linear motor is controlled according to the vibration parameter to vibrate, to enable the steering wheel to vibrate with the transverse linear motor. The vibration parameter includes at least one of a vibration frequency, a vibration amplitude, vibration duration, and a vibration direction.

Optionally, step 201 may be implemented in the following manner:
Vibration interaction information corresponding to each information obtaining apparatus is obtained. Each information obtaining apparatus corresponds to one type of vibration interaction information.

Step 202 may be implemented in the following manner:
Target vibration interaction information is determined according to a plurality of pieces of vibration interaction information obtained, and the vibration parameter is determined according to the target vibration interaction information.

Optionally, each type of vibration interaction information corresponds to a preset vibration priority. That target vibration interaction information is determined according to a plurality of pieces of vibration interaction information obtained includes:
Vibration interaction information corresponding to a highest vibration priority is used as the target vibration interaction information.

Optionally, in a case that vibration interaction information includes the user information, step 202 may be implemented in the following manner:
A user identifier of the user is determined according to the user information, and the vibration parameter is determined according to the user identifier and the vibration interaction information. The user information includes at least one of face information, voice information, fingerprint information, and weight information.

Optionally, that the vibration parameter is determined according to the user identifier and the vibration interaction information includes:
A target parameter correspondence is determined in a plurality of preset parameter correspondences according to the user identifier, and the vibration parameter is determined according to the vibration interaction information and the target parameter correspondence. The preset parameter correspondence is a correspondence between the vibration interaction information and the vibration parameter.

Optionally, step 202 may be implemented in the following manner:
A vehicle usage scenario in which the vehicle is located is determined according to the vibration interaction information, and the vibration parameter is determined according to the vehicle usage scenario and the vibration interaction information.

Optionally, the method may further include the following step:
It is determined whether the vehicle usage scenario includes a target vehicle usage scenario, and when it is determined that the vehicle usage scenario includes the target vehicle usage scenario, responding to vibration interaction information corresponding to the target vehicle usage scenario is skipped.

Optionally, the method may further include the following step:
It is determined whether the vibration interaction information satisfies a preset information condition, and when it is determined that the vibration interaction information does not satisfy the preset information condition, it is determined that the vibration interaction information is abnormal information.

Optionally, in a case that the vibration interaction information includes only the user information, and the user information is face information, step 201 may be implemented in the following manner:
The face information is obtained. The face information includes a facial feature, an eye status, and head movement data of the user.

Step 202 may be implemented in the following manner:
A fatigue status of the user is determined according to the face information, and the vibration parameter is determined according to the fatigue status.

Optionally, in a case that the vibration interaction information includes only the multimedia information, and the multimedia information includes audio information and volume information, step 201 may be implemented in the following manner:
Audio information of target audio and volume information of the target audio adjusted by the user are obtained.

Step 202 may be implemented in the following manner:
A vibration frequency of the steering wheel is determined according to the audio information and using a preset vibration frequency correspondence. The vibration frequency correspondence is a correspondence between the audio information and the vibration frequency.

A vibration amplitude of the steering wheel is determined according to the volume information and using a preset vibration amplitude correspondence. The vibration amplitude correspondence is a correspondence between the volume information and the vibration amplitude.

Optionally, in a case that the vibration interaction information includes only the multimedia information, and the multimedia information is call information, step 201 may be implemented in the following manner:
Call information of a currently connected target call is obtained.

Step 202 may be implemented in the following manner:

The vibration parameter is determined according to the call information.

Optionally, the call information includes a call identifier of the target call. That the vibration parameter is determined according to the call information includes:
A call priority of the target call is determined according to the call identifier, and the vibration parameter is determined according to the call priority.

Optionally, in a case that vibration interaction information includes only the traveling information, step 201 may be implemented in the following manner:
Traveling information of the vehicle is obtained.

Step 202 may be implemented in the following manner:
The vibration parameter is determined according to the traveling information.

Optionally, in a case that vibration interaction information includes only the environmental information, step 201 may be implemented in the following manner:
The environmental information is obtained.

Step 202 may be implemented in the following manner:
The vibration parameter is determined according to the environmental information and a preset navigation route.

Optionally, the environmental information includes road information of a road on which the vehicle is located and obstacle information of surroundings of the vehicle. That the vibration parameter is determined according to the environmental information and a preset navigation route includes:
A traveling operation of the vehicle is determined according to the road information, the obstacle information, and the navigation route, and the vibration parameter is determined according to the traveling operation.

Optionally, in a case that vibration interaction information includes only the lighting information, step 201 may be implemented in the following manner:
Lighting information of a target light inside the vehicle is obtained. The lighting information includes a lighting color, a flashing frequency, and a lighting presentation effect of the target light.

Step 202 may be implemented in the following manner:
A vibration amplitude of the steering wheel is determined according to the lighting color, a vibration frequency of the steering wheel is determined according to the flashing frequency, and vibration duration and a vibration direction of the steering wheel are determined according to the lighting presentation effect.

In conclusion, the vibration control system for a steering wheel in the present disclosure includes a controller, an information obtaining apparatus, and a steering wheel of a vehicle. The controller is connected to the information obtaining apparatus and the steering wheel respectively. A transverse linear motor is arranged on the steering wheel. The information obtaining apparatus is configured to obtain vibration interaction information and send the vibration interaction information to the controller. The controller is configured to determine a vibration parameter of the steering wheel according to the vibration interaction information, and control, according to the vibration parameter, the transverse linear motor to vibrate, to enable the steering wheel to vibrate with the transverse linear motor. In the present disclosure, vibration parameters of the steering wheel in different vehicle usage scenarios are determined according to vibration interaction information, and the steering wheel is controlled based on the vibration parameters through a transverse linear motor to vibrate, to adjust the vibration form of the steering wheel in the different vehicle usage scenarios, thereby optimizing the interactive experience of the steering wheel while improving the operability and intelligence of the steering wheel, to further satisfy use requirements of users for the steering wheel.

The present disclosure further relates to a vehicle. As shown in FIG 11, the vibration control system 100 for a steering wheel according to any one of the foregoing is arranged on the vehicle 300.

With regard to the vibration control system 100 for a steering wheel in the foregoing embodiments, specific manners of performing operations by the vibration control system 100 for a steering wheel have been in detail in the embodiments related to the apparatus, and details are described herein again.

In conclusion, the vibration control system for a steering wheel in the present disclosure includes a controller, an information obtaining apparatus, and a steering wheel of a vehicle. The controller is connected to the information obtaining apparatus and the steering wheel respectively. A transverse linear motor is arranged on the steering wheel. The information obtaining apparatus is configured to obtain vibration interaction information and send the vibration interaction information to the controller. The controller is configured to determine a vibration parameter of the steering wheel according to the vibration interaction information, and control, according to the vibration parameter, the transverse linear motor to vibrate, to enable the steering wheel to vibrate with the transverse linear motor. In the present disclosure, vibration parameters of the steering wheel in different vehicle usage scenarios are determined according to vibration interaction information, and the steering wheel is controlled based on the vibration parameters through a transverse linear motor to vibrate, to adjust the vibration form of the steering wheel in the different vehicle usage scenarios, thereby optimizing the interactive experience of the steering wheel while improving the operability and intelligence of the steering wheel, to further satisfy use requirements of users for the steering wheel.

The preferred implementations of the present disclosure are described in detail above with reference to the accompanying drawings. However, the present disclosure is not limited to the specific details in the foregoing implementations, a plurality of simple deformations may be made to the technical solution of the present disclosure within a range of the technical concept of the present disclosure, and these simple deformations fall within the protection scope of the present disclosure.

In addition, it should be noted that, the specific technical features described in the above specific implementations may be combined in any suitable manner without contradiction. To avoid unnecessary repetition, various possible combinations are not further described in the present disclosure.

In addition, the various implementations of the present disclosure may be combined arbitrarily as long as it does not deviate from the idea of the present disclosure, and the combination should also be regarded as the contents of the present invention.

## Claims

1. A vibration control system for a steering wheel, comprising a controller, an information obtaining apparatus, and a steering wheel of a vehicle, the controller being connected to the information obtaining apparatus and the steering wheel respectively, and a transverse linear motor being arranged on the steering wheel;
the information obtaining apparatus being configured to obtain vibration interaction information and send the vibration interaction information to the controller, the vibration interaction information comprising at least one of user information corresponding to a user of the vehicle, multimedia information of the vehicle, traveling information of the vehicle, environmental information of an environment in which the vehicle is located, and lighting information of the vehicle; and
the controller being configured to determine a vibration parameter of the steering wheel according to the vibration interaction information, and control, according to the vibration parameter, the transverse linear motor to vibrate, to enable the steering wheel to vibrate with the transverse linear motor, the vibration parameter comprising at least one of a vibration frequency, a vibration amplitude, vibration duration, and a vibration direction.

2. The system according to claim 1, wherein a plurality of information obtaining apparatuses are comprised, each information obtaining apparatus corresponding to one type of vibration interaction information;
each information obtaining apparatus is configured to obtain the vibration interaction information corresponding to the information obtaining apparatus and send the vibration interaction information corresponding to the information obtaining apparatus to the controller; and
the controller is configured to determine target vibration interaction information according to a plurality of pieces of vibration interaction information obtained, and determine the vibration parameter according to the target vibration interaction information.

3. The system according to claim 2, wherein each type of vibration interaction information corresponds to a preset vibration priority, the controller being configured to use vibration interaction information corresponding to a highest vibration priority as the target vibration interaction information.

4. The system according to claim 1, wherein in a case that the vibration interaction information comprises the user information, the controller is configured to determine a user identifier of the user according to the user information, and determine the vibration parameter according to the user identifier and the vibration interaction information, the user information comprising at least one of face information, voice information, fingerprint information, and weight information.

5. The system according to claim 4, wherein the controller is configured to determine a target parameter correspondence in a plurality of preset parameter correspondences according to the user identifier, and determine the vibration parameter according to the vibration interaction information and the target parameter correspondence, the preset parameter correspondence being a correspondence between the vibration interaction information and the vibration parameter.

6. The system according to claim 1, wherein the controller is configured to determine, according to the vibration interaction information, a vehicle usage scenario in which the vehicle is located, and determine the vibration parameter according to the vehicle usage scenario and the vibration interaction information.

7. The system according to claim 6, wherein the controller is configured to determine whether the vehicle usage scenario comprises a target vehicle usage scenario, and skip, when determining that the vehicle usage scenario comprises the target vehicle usage scenario, responding to vibration interaction information corresponding to the target vehicle usage scenario.

8. The system according to claim 1, wherein the controller is configured to determine whether the vibration interaction information satisfies a preset information condition, and determine, when determining that the vibration interaction information does not satisfy the preset information condition, that the vibration interaction information is abnormal information.

9. The system according to claim 1, wherein in a case that the vibration interaction information comprises only the user information, and the user information is face information, the information obtaining apparatus is a face information obtaining apparatus, the face information obtaining apparatus being configured to obtain the face information, and send the face information to the controller, the face information comprising a facial feature, an eye status, and head movement data of the user; and
the controller is configured to determine a fatigue status of the user according to the face information, and determine the vibration parameter according to the fatigue status.

10. The system according to claim 1, wherein in a case that the vibration interaction information comprises only the multimedia information, and the multimedia information comprises audio information and volume information, the information obtaining apparatus comprises an audio information obtaining apparatus and a volume information obtaining apparatus;
the audio information obtaining apparatus is configured to obtain audio information of target audio, and send the audio information to the controller;
the volume information obtaining apparatus is configured to obtain volume information of the target audio adjusted by the user, and send the volume information to the controller;
the controller is configured to determine a vibration frequency of the steering wheel according to the audio information and using a preset vibration frequency correspondence, the vibration frequency correspondence being a correspondence between the audio information and the vibration frequency; and
the controller is configured to determine a vibration amplitude of the steering wheel according to the volume information and using a preset vibration amplitude correspondence, the vibration amplitude correspondence being a correspondence between the volume information and the vibration amplitude.

11. The system according to claim 1, wherein in a case that the vibration interaction information comprises only the multimedia information, and the multimedia information is call information, the information obtaining apparatus is a call information obtaining apparatus, the call information obtaining apparatus being configured to obtain call information of a currently connected target call, and send the call information to the controller; and
the controller is configured to determine the vibration parameter according to the call information.

12. The system according to claim 11, wherein the call information comprises a call identifier of the target call; and
the controller is configured to determine a call priority of the target call according to the call identifier, and determine the vibration parameter according to the call priority.

13. The system according to claim 1, wherein in a case that the vibration interaction information comprises only the traveling information, the information obtaining apparatus is a traveling information obtaining apparatus, the traveling information obtaining apparatus being configured to obtain traveling information of the vehicle, and send the traveling information to the controller; and
the controller is configured to determine the vibration parameter according to the traveling information.

14. The system according to claim 1, wherein in a case that the vibration interaction information comprises only the environmental information, the information obtaining apparatus is an environmental information obtaining apparatus, the environmental information obtaining apparatus being configured to obtain the environmental information, and send the environmental information to the controller; and
the controller is configured to determine the vibration parameter according to the environmental information and a preset navigation route.

15. The system according to claim 14, wherein the environmental information comprises road information of a road on which the vehicle is located and obstacle information of surroundings of the vehicle; and
the controller is configured to determine a traveling operation of the vehicle according to the road information, the obstacle information, and the navigation route, and determine the vibration parameter according to the traveling operation.

16. The system according to claim 1, wherein in a case that the vibration interaction information comprises only the lighting information, the information obtaining apparatus is a lighting information obtaining apparatus;
the lighting information obtaining apparatus is configured to obtain lighting information of a target light inside the vehicle, and send the lighting information to the controller, the lighting information comprising a lighting color, a flashing frequency, and a lighting presentation effect of the target light; and
the controller is configured to determine a vibration amplitude of the steering wheel according to the lighting color, determine a vibration frequency of the steering wheel according to the flashing frequency, and determine vibration duration and a vibration direction of the steering wheel according to the lighting presentation effect.

17. A vibration control method for a steering wheel, comprising:
obtaining vibration interaction information, the vibration interaction information comprising at least one of user information corresponding to a user of a vehicle, multimedia information of the vehicle, traveling information of the vehicle, environmental information of an environment in which the vehicle is located, and lighting information of the vehicle; and
determining a vibration parameter of a steering wheel according to the vibration interaction information, and controlling, according to the vibration parameter, a transverse linear motor to vibrate, to enable the steering wheel to vibrate with the transverse linear motor, the vibration parameter comprising at least one of a vibration frequency, a vibration amplitude, vibration duration, and a vibration direction.

18. A vehicle, the vehicle being arranged with the vibration control system for a steering wheel according to any one of claims 1 to 16.
